(19) Europäisches Patentamt
European Patent Office
Office européen des brevets

(11) Publication number: 0 546 192 A1

(12) # EUROPEAN PATENT APPLICATION published in accordance with Art. 158(3) EPC

(21) Application number: 92912914.6

(22) Date of filing: 24.06.92

(86) International application number:
PCT/JP92/00805

(87) International publication number:
WO 93/00370 (07.01.93 93/02)

(30) Priority: 28.06.91 JP 183632/91

(43) Date of publication of application:
16.06.93 Bulletin 93/24

(84) Designated Contracting States:
BE DE ES FR GB IT NL SE

(51) Int. Cl.5: C08F 10/00, C08F 4/654

(71) Applicant: IDEMITSU PETROCHEMICAL COMPANY LIMITED
1-1, Marunouchi 3-chome Chiyoda-ku
Tokyo 100(JP)

(72) Inventor: TANAKA, Akira
Idemitsu Petrochemical Co. Ltd, 1-1, Anesakikaigan
Ichihara-shi, Chiba-ken 299-01(JP)
Inventor: FUNABASHI, Hideo
Idemitsu Petrochemical Co. Ltd, 1-1, Anesakikaigan
Ichihara-shi, Chiba-ken 299-01(JP)
Inventor: TSURUOKA, Masayuki
Idemitsu Petrochemical Co. Ltd, 1-1, Anesakikaigan
Ichihara-shi, Chiba-ken 299-01(JP)

(74) Representative: Hoeger, Stellrecht & Partner
Uhlandstrasse 14 c
W-7000 Stuttgart 1 (DE)

(54) ## PROCESS FOR PRODUCING OLEFIN POLYMER.

(57) A process for producing olefin polymer in the absence of any solvent by using a catalytic system composed of the following components: (A) a solid catalyst component prepared by the reaction of (a) a solid reaction product prepared from metallic magnesium, an alcohol and a given amount of a halogen and/or a halogen compound with (b) a titanium halide compound optionally in the presence of an electron-donating compound, (B) an organoaluminum compound, (C) an alkoxylated aromatic compound represented by general formula (I) wherein $R^1$ represents $C_1$ to $C_{20}$ alkyl; $R^2$ represents $C_1$ to $C_{10}$ hydrocarbyl, hydroxyl or nitro; m represents an integer of 1 to 6; and n represents an integer of 1 to (6-m), and (D) an electron-donating compound.

EP 0 546 192 A1

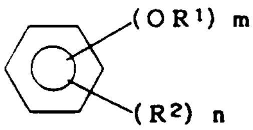

(I)

FIGURE 1

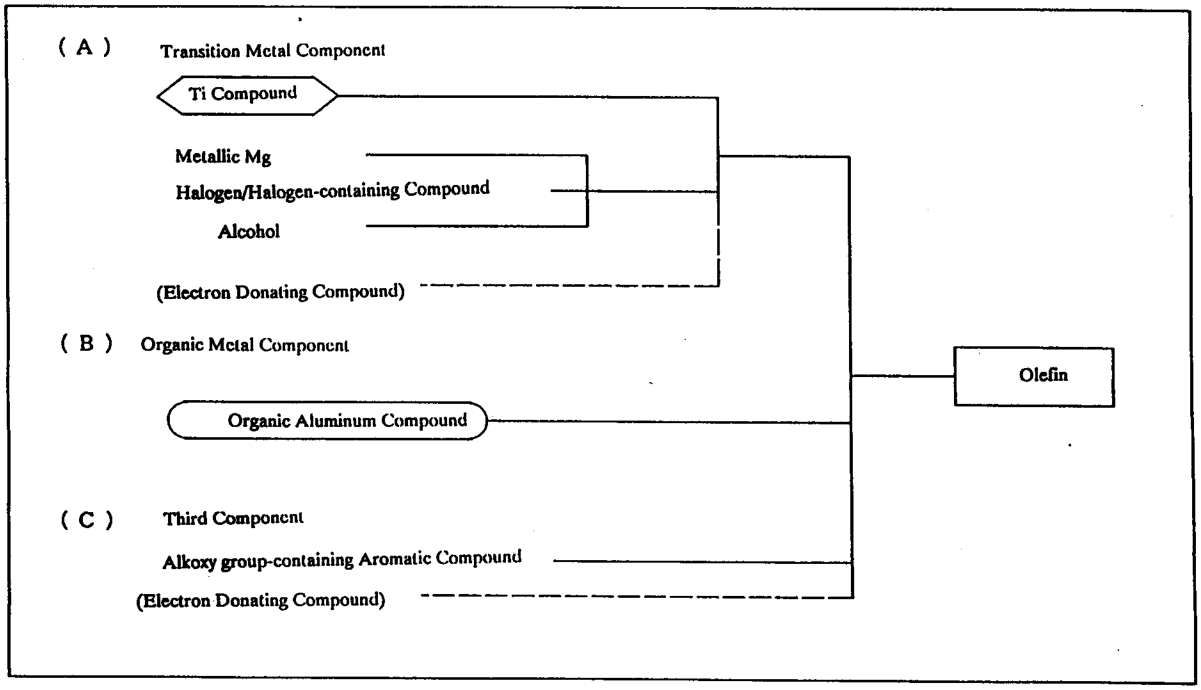
( A )
Transition Metal Component
Ti Compound
Metallic Mg
Halogen/Halogen-containing Compound
Alcohol
(Electron Donating Compound)
( B )
Organic Metal Component
Organic Aluminum Compound
Olefin
( C )
Third Component
Alkoxy group-containing Aromatic Compound
(Electron Donating Compound)

## Field of the Invention

The present invention relates to a process for manufacturing an olefin polymer.

## Description of Background Art

Thermoplastic elastomers are widely used, particularly as substitutes for vulcanized rubbers, as automobile parts, industrial machine parts, electronic or electric parts, building materials, and the like as energy saving or natural resource saving type elastomers.

Thermoplastic olefin elastomers (TPO) are generally manufactured by a process wherein polypropylene and ethylene-propylene-diene rubber (EPDM) are kneaded in the presence of a peroxide (e.g., Japanese Patent Laid-open (ko-kai) No. 217747/1986). The process, however, has drawbacks in that the procedure is complicated and the production cost is high.

On the other hand, a number of trials have been undertaken for the reduction of the production cost by directly manufacturing at the polymerization step high molecular weight polymers having the same dynamic characteristics as those of the above-mentioned TPO. For example, propylene-hexene copolymers (e.g., Japanese Patent Laid-open (ko-kai) No. 53983/1974 and Japanese Patent Publication (ko-koku) No. 19444/1987), elastic polypropylene (Japanese Patent Laid-open (ko-kai) No. 179247/1986), and the like have been proposed.

However, all these high molecular weight polymers has insufficient low temperature characteristics. Although a propylene/ethylene-propylene two step polymerisation method has been well known (e.g., Japanese Patent Laid-open (ko-kai) No. 50804/1982) as a method for improving the low temperature characteristics of polypropylene, it was difficult to manufacture a vulcanized rubber-like polymer possessing both flexibility and a tension strength resistible for practical use by this method.

An object of the present invention is to provide a process for manufacturing an olefin polymer, which not only possesses a tension strength resistible for practical use, satisfactory flexibility, sufficient low temperature characteristics, and low surface tackiness, even in an unvulcanized state, but also can be manufactured at a low production cost and exhibits an excellent powder flowability.

## Disclosure of the Invention

As a result of extensive studies in order to achieve the above object, the present inventors have found that a vulcanised rubber-like olefin polymer possessing the same characteristics as those of TPO (which is partially cross-linked) can easily be manufactured by regulating crystallinity of the polymer by using a specific catalyst system, even though the polymer is not cross-linked. The present invention has been completed based on this finding.

Accordingly, the present invention provides a process for manufacturing an olefin polymer by a solvent-free polymerization method characterized by using a catalyst system comprising,

(A) a solid catalyst component obtained by the reaction, either in the presence or absence of an electron donating compound, of (a) a solid product obtained by reacting metallic magnesium, an alcohol, and a halogen atom in an amount of 0.0001 gram-atom or greater for 1 gram-atom of said metallic magnesium or a halogen-containing compound, which contains a halogen atom in an amount of 0.0001 gram-atom or greater for 1 gram-atom of said metallic magnesium, and (b) a halogenated titanium compound;

(B) an organic aluminum compound;

(C) an alkoxy group-containing aromatic compound represented by the following formula;

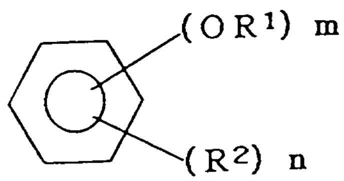

wherein $R^1$ is an alkyl group having 1-20 carbon atoms, $R^2$ is a hydrocarbon group having 1-10 carbon atoms, a hydroxy group, or a nitro group, m is an integer of 1-6, and n is 0 or an integer 1 to (6-m); and

(D) an electron donating compound.

In this case, a solid component (E) may be composed by the above solid catalyst component (A) and a crystalline polyolefin, and a catalyst system comprising this solid component (E) and the above components (B), (C), and (D) may also be used.

The present invention is now illustrated in detail.

First, the catalyst system used in the present invention is illustrated.

The solid catalyst component (A) used in the present invention is obtained by the reaction of at least (a) a solid product obtained by reacting metallic magnesium, an alcohol, and a halogen and/or a halogen-containing compound and (b) a halogenated titanium compound, either in the presence or absence of an electron donating compound.

In this instance, forms and the like of metallic magnesium in said solid product (a) are not specifically limited. Accordingly, metallic magnesium having an arbitrary diameter had any form, e.g., granule, ribbon-shaped, powder, etc., can be used. Surface conditions of the metallic magnesium are also not specifically limited, although metallic magnesium with no films, such as films of magnesium oxide or the like, formed on the surface is preferred.

Any alcohols may be used, although the use of a lower alcohol having 1-6 carbon atoms are preferred. In particular, ethanol is preferably used, since it can produce a solid product which remarkably promotes the catalyst performance. There are no limitations as to the purity and water content of alcohol. However, an alcohol containing water in an amount of 1% or less, in particular 2000 ppm or less, is preferred, since the use of an alcohol containing a large amount of water produces magnesium hydroxide [$Mg(OH)_2$] on the surface of metallic magnesium. Furthermore, in order to obtain the solid component (a) possessing a better morphology a minimal amount of water content is desirable. In general, a water content of 200 ppm or less is preferable.

There are no specific limitations as to the kind of halogen; chlorine, bromine, or iodine, especially iodine, are used preferably.

No limitations are imposed to the halogen-containing compounds; any compounds containing a halogen atom in their chemical structures can be used. In this instance, there are no specific limitations as to the kinds of halogen atom, although chlorine, bromine, or iodine is preferred. Among halogen-containing compounds, halogen-containing metal compounds are preferable.

Specific halogen-containing compounds which can be suitably used are $MgCl_2$, $MgI_2$, Mg(OEt)Cl, Mg(OEt)I, $MgBr_2$, $CaCl_2$, NaCl, KBr, and the like. Of these, especially preferred are $MgCl_2$ and $MgI_2$.

There are no specific limitations as to their states, shapes, particles size, and the like. Any arbitrary ones may be used, e.g., a solution in an alcohol solvent (e.g., ethanol).

There are no limitations as to the amount of alcohol, although a preferable amount is 2-100 mol for 1 mole of metallic magnesium, with an especially preferable amount being 5-50 mole for 1 mole of metallic magnesium. If the amount of alcohol is too large, an yield of solid product (a) with a good morphology may decrease; if the amount is too small, stirring in the reaction vessel may not be performed smoothly. However, the above molar ratios are not limitative.

The amount of halogen to be used is 0.0001 gram-atom or greater, preferably 0.0005 gram-atom or greater, and more preferably 0.001 gram-atom or greater, for 1 gram-atom of metallic magnesium. The amount of the halogen-containing compound to be used, in terms of gram-atom of halogen atom contained in such a compound for 1 gram-atom of metallic magnesium, is 0.0001 or greater, preferably 0.0005 or greater, and more preferably 0.001 or greater. An amount less than 0.0001 gram-atom brings about no significant difference as compared with the case where halogen is used as a reaction initiator, making it indispensable to pulverize and classify the solid product in order to obtain such a product with a desired particle size.

Either single halogen or halogen-containing compound may be used, or two or more of them may be used in combination. In addition, a halogen and a halogen-containing compound may be used together in combination. When a halogen and a halogen-containing compound are used together, an amount of the total halogen atoms, in terms of gram-atom for 1 gram-atom of metallic magnesium, is 0.0001 or greater, preferably 0.0005 or greater, and more preferably 0.001 or greater.

There are no specific restrictions as to the upper limit of the amount of the halogen and/or halogen-containing compound. Such an amount can be suitably selected from the range in which the target solid product can be obtained, although it is desirable in general that the amount of the total halogen atom is less than 0.06 gram-atom per 1 gram-atom of metallic magnesium.

In this instance, it is possible to freely control the particle size of the solid product by suitably selecting the amount of the halogen and/or halogen-containing compound used.

The reaction of metallic magnesium, alcohol, and the halogen and/or halogen-containing compound can be carried out in the same manner as a method known *per se* in the art. For example, the metallic

magnesium, alcohol, and halogen and/or halogen-containing compound may be reacted under refluxing (about 79 ° C) until no production of hydrogen gas is observed (usually for about 20-30 hours) to produce a solid product. Specifically, in the case where iodine is used as a halogen, a method wherein solid iodine is charged into metallic magnesium and alcohol, followed by refluxing under heating; a method wherein a solution of solid iodine in alcohol is added dropwise to metallic magnesium and alcohol, followed by refluxing under heating; a method wherein a solution of metallic magnesium and an alcohol solution are added to a solution of solid iodine in alcohol while refluxing under heating; and the like can be used.

In any methods, the reactions are desirably carried out under an inert gas atmosphere (e.g., nitrogen gas, argon gas), and optionally by using an inert organic solvent (e.g., a saturated hydrocarbon such as n-hexane or the like).

Total amounts of each of the metallic magnesium, alcohol, and halogen and/or halogen-containing compound are not necessarily charged into the reaction vessel at the beginning; each may be added in portions. A particularly preferable manner is charging the total amount of alcohol at the beginning and adding metallic magnesium dividedly in several times. This manner of operation is particularly preferred from the aspect of the safety, since generation of hydrogen gas at one time can be avoided by doing so. In addition, the reaction vessel can be made small. Furthermore, entrapping of alcohol, halogen and/or halogen-containing compound induced by generation of hydrogen gas at one time can also be avoided. Times for which these components are added dividedly can be determined taking the scale of the reaction vessel into consideration. Thus, there are no specific limitations as to the times, although 5-10 times are usually preferable when complication of the procedure is considered.

It is needless to mention that the reaction itself can be carried out either batchwise or continuously. In addition, as an alternative method, a procedure wherein a small amount of metallic magnesium is first added to alcohol of which the all amount is charged initially, and then the product produced by the reaction is separated and transferred to another vessel to remove it from the reaction vessel, followed by the addition of a small amount of metallic magnesium and repetition of this procedure is possible.

When the solid product thus obtained is used for the following synthesis of the solid catalyst component, it may be used as is after drying or may be used after filtration and washing with an inert solvent such as heptane. In either case, the solid component can be used in the next step without a pulverization or a classification procedure for narrowing the particle distribution.

The solid catalyst component (A) used in the present invention can be obtained from at least (a) said solid product and (b) a halogenated titanium compound.

Compounds represented by the following formula can be given as examples of the halogenated titanium compound (b) in the solid catalyst component (A),

$$TiX^1n(OR^1)_{4-n}$$

wherein $X^1$ is a halogen atom, especially chlorine atom, $R^1$ is a hydrocarbon group having 1-10 carbon atoms, especially a linear or branched alkyl group, provided that when two or more $R^1$s exist they may be either same or different, and n is an integer of 0-4.

Specific examples include, $Ti(O\text{-}i\text{-}C_3H_7)_4$, $Ti(O\text{-}C_4H_9)_4$, $TiCl(O\text{-}C_2H_5)_3$, $TiCl(O\text{-}i\text{-}C_3H_7)_3$, $TiCl(O\text{-}C_4H_9)_3$, $TiCl_2(O\text{-}C_4H_9)_2$, $TiCl_2(O\text{-}i\text{-}C_3H_7)_2$, $TiCl_4$, and the like.

An arbitrary electron donating compound (c) can be used as needed as another component for the preparation of the solid catalyst component (A). The electron donating compound (c) may usually be an organic compound containing oxygen, nitrogen, phosphorous, or sulfur. Specifically it may be an aminine, amide, ketone, nitrile, phosphine, phosmilamide, ester, ether, thioether, alcohol, thioester, acid anhydride, acid halide, aldehyde, organic acid, organic silicon compound having an Si-O-C bond, or the like. Following compounds can be given as specific examples.

Aromatic carboxylic acid, e.g., benzoic acid, p-oxybenzoic acid; acid anhydrides, e.g., succinic acid anhydride, benzoic acid anhydride, p-toluic acid anhydride; ketones having 3-15 carbon atoms, e.g., acetone, methyl ethyl ketone, methyl isobutyl ketone, acetophenone, benzophenone, benzoquinone; aldehydes having 2-15 carbon atoms, e.g., acetoaldehyde, propionaldehyde, octylaldehyde, benzaldehyde, naphthaldehyde; esters having 2-18 carbon atoms, e.g., methyl formate, ethyl formate, methyl acetate, ethyl acetate, vinyl acetate, propyl acetate, octyl acetate, cyclohexyl acetate, ethyl propionate, methyl butyrate, ethyl butyrate, ethyl valerate, methyl chloroacetate, ethyl dichloroacetate, methyl methacrylate, ethyl crotonate, ethyl pivalate, dimethyl maleate, ethyl cyclohexanecarboxylate, methyl benzoate, ethyl benzoate, propyl benzoate, butyl benzoate, octyl benzoate, cyclohexyl benzoate, phenyl benzoate, benzyl benzoate, methyl tolylate, ethyl tolylate, amyl tolylate, ethyl ethylbenzoate, methyl anicate, ethyl anicate, ethyl ethoxybenzoate, ethyl p=butoxybenzoate, ethyl o-chlorobenzoate, ethyl naphthoate, $\tau$-butyrolactone, $\delta$-

valelolactone, coumarin, phthalide, ethylene carbonate; mono- or diester of aromatic dicarboxylate, preferably monoester or diester of phthalic acid, e.g., monomethyl phthalate, dimethyl phthalate, monomethyl terephthalate, dimethyl terephthalate, monoethyl phthalate, diethyl phthalate, monoethyl terephthalate, diethyl terephthalate, monopropyl phthalate, dipropyl phthalate, monopropyl terephthalate, dipropyl terephthalate, monobutyl phthalate, dibutyl phthalate, monobutyl terephthalate, dibutyl terephthalate, monoisobutyl phthalate, diisobutyl phthalate, monoamyl phthalate, diamyl phthalate, monoisoamyl phthalate, diisoamyl phthalate, ethyl butyl phthalate, ethyl isobutyl phthalate, ethyl propyl phthalate; acid halides having 2-20 carbon atoms, preferably having a 1-3 valency acyl group having a structure with deleted hydroxyl group from aliphatic mono-, di-, or tribasic acid containing about 2-20 carbon atoms (including those having a cyclic structure such as alicyclic acids), or a 1-3 valency acyl group having a structure with deleted hydroxyl group from aromatic-type (including alkallyl- or aralkyl-type) mono-, di-, or tribasic acid containing about 7-20 carbon atoms. As halogen atoms in said acid halides, chlorine atom or bromine atom, especially chlorine atoms, are preferable.

Acid halides which can be suitably used include, for example, acetyl chloride, acetyl bromide, propionyl chloride, butyryl chloride, isobutyryl chloride, 2-matylpropionyl chloride, valelyl chloride, isovalelyl chloride, haxanoyl chloride, methylhaxanoyl chloride, 2-ethylhaxanoyl chloride, octanoyl chloride, decanoyl chloride, undecanoyl chloride, hexadecanoyl chloride, octadecanoyl chloride, benzylcarbonyl chloride, cyclohexanecarbonyl chloride, maronyl dichloride, succinyl dichloride, pentanedioyl dichloride, hexanedioyl dichloride, cyclohexanedicarbonyl dichloride, benzoyl chloride, benzoyl bromide, methylbenzoyl chloride, phthaloyl chloride, isophthaloyl chloride, terephthaloyl chloride, benzene-1,2,4-tricarbonyl trichloride, and the like. Among these, phthaloyl chloride, isophthaloyl chloride, and terephthaloyl chloride, especially phthaloyl chloride, are particularly preferred. These acid halides may be used either singly or two or more of them may be used in combination.

Ethers having 2-20 carbon atoms, e.g., methyl ether, ethyl ether, isopropyl ether, n-butyl ether, amyl ether, tetrahydrofuran, anisole, diphenyl ether, ethylene glycol butyl ether; acid amides, e.g., acetic acid amide, benzoic acid amide, toluic acid amide; amines, e.g., tributylamine, N,N'-dimethylpiperadine, tribenzylamine, aniline, pyridine, pyrroline, tetramethylethylenediamine, nitriles, e.g., acetonitrile, benzonitrile, trinitrile; tetramethyl urea, nitrobenzene, lithium butyrate; organic silicon compounds having an Si-O-C bond, e.g., trimethylmethoxysilane, trimethylethoxysilane, dimethyldimethoxysilane, dimethyldiethoxysilane, diphenyldimethoxysilane, methylphenyldimethoxysilane, diphenyldiethoxysilane, phenyltrimethoxysilane, $\gamma$-chloropropyltrimethoxysilane. methyltriethoxysilane, ethyltriethoxysilane, vinyltriethoxysilane, butyltriethoxysilane, phenyltriethoxysilane, $\gamma$-aminopropyltriethoxysilane, chlorotriethoxysilane, ethyltriisopropoxysilane, vinyltributoxysilane, isopropylcyclohexyldimethoxysilane, isobutylcyclohexyldimethoxysilane, tert-butylcyclohexyldimethoxysilane, isopropylcyclohexyldiethoxysilane, isobutylcyclohexyldiethoxysilane, tert-butylcyclohexyldiethoxysilane, methylcyclohexyldimethoxysilane, ethyl silicate, butyl silicate, trimethylphenoxysilane, methyltriallyloxysilane, vinyltris($\beta$-methoxyethoxy)silane, vinyltriacetoxysilane, dimethyltetraethoxydisiloxane; and the like.

Among the above compounds, esters, ethers, ketones, acid anhydrides are preferable.

In the case where the solid component (a) and the electron donating compound (c) are contacted, followed by contact of titanium compound (b), for the preparation of solid catalyst component (A), conditions under which the electron donating compound (c) is contacted with the solid component (a) can be suitably determined without specific limitations depending on various circumstances. Usually, the catalytic reaction is carried out by adding 0.01-10 mole, preferably 0.05-5 mole, of electron donating compound (c) to 1 mole, as magnesium atom, of the solid component (a), and at 0-200 °C for 5 minutes to 10 hours, preferably at 30-150 °C for 30 minutes to 3 hours. An inert hydrocarbon, such as pentane, hexane, heptane, or octane, may be added to the reaction system.

There are also no specific limitations as to the conditions for contacting the titanium compound (b) with the solid product (a) or a product produced by the contact of the solid product (a) and electron donating compound (c). Usually, the reaction is carried out by adding 1-50 mole, preferably 2-20 mole, of electron donating compound (c) to 1 mole, as magnesium atom, of the solid component (a), and at 0-200 °C for 5 minutes to 10 hours, preferably at 30-150 °C for 30 minutes to 5 hours. An inert hydrocarbon such as pentane, hexane, heptane, or octane may be added to the reaction system.

There are no specific limitations as to the conditions under which titanium compound (b) contacts the product produced by the contact of solid product (a) and electron donating compound (c). Usually, in the range of 1-50 mol, preferably 2-20 mol, of titanium compound (b) per 1 mol of magnesium is added and reacted at 0-200 °C for 5 minutes to 10 hours, preferably at 30-150 °C for 30 minutes to 5 hours.

The contact with the titanium compound (b) can be performed by using the titanium compound alone if it is a liquid (e.g., titanium tetrachloride), or by dissolving it in an arbitrary inert hydrocarbon solvent (e.g.,

hexane, heptane, kerosene) in the case of other titanium compounds. Furthermore, the solid product (a) may be contacted, for example, with a halogenated hydrocarbon, a halogen-containing silicon compound, a halogen gas, hydrogen chloride, hydrogen iodide, or the like, in advance of said contacted of the solid product (a) with the titanium compound (b), and, as needed, with the electron donating compound (c).

It is desirable that the product be washed with an inert hydrocarbon (e.g., n-hexane, n-heptane) after the reaction.

The solid catalyst component (A) thus prepared usually has a composition of an atomic ratio of magnesium and titanium in the range of 2-100, an atomic ratio of halogen and titanium in the range of 5-200, a molar ratio of electron donating compound and titanium in the range of 0.1-10.

In the present invention, a catalyst system comprising solid component (E), which is constituted by said solid catalyst component (A) and crystalline polyolefin, and said components (B), (C), and (D) may also be used.

Examples which can be used for the preparation of this solid component (E) include:

(1) a method of pre-polymerizing an olefin in the presence of a mixture of said solid catalyst component (A) and an organic aluminum compound (m.p. 100 °C or higher), and, as needed, said electron donating compound (pre-polymerization method),

(2) a method of dispersing said solid catalyst component (A) and, as needed, said organic aluminum compound and electron donating compound, into crystalline powder with uniform particle size such as crystalline polypropylene or polyethylene (dispersion method), and

(3) The combination of said methods (1) and (2).

Crystalline polyolefins obtained form an $\alpha$-olefin having 2-10 carbon atoms, such as, for example, polyethylene, polypropylene, polybutene, poly-4-methylpentene, and the like, can be used as said solid component (E). These crystalline polyolefins can be prepared by pre-polymerizing an $\alpha$-olefin having 2-10 carbon atoms according to said method (1), usually at 30-80 °C, and preferably at 55-70 °C.

In this instance, the atomic ratio of aluminum and titanium can be selected from the range, usually of 0.1-100, and preferably 0.5-5, and the molar ratio of electron donating compound and titanium can be selected from the range of 0-50, and preferably 0.1-2. Crystalline polyolefins prepared in the form of powder, as mentioned in the above method (2), can also be used as a crystalline polyolefin.

As crystalline polyolefins, those having a melting point of 100 °C or higher are preferred.

The same organic aluminum compounds exemplified hereinafter as component (B) can be used as the organic aluminum compounds for the preparation of said solid component (E). In addition, as the electron donating compounds, which are used as needed, those previously exemplified as the electron donating compounds for component (A) may be used.

The proportion of the crystalline polyolefin and the solid catalyst component (A) used for the preparation of said solid component (E), in terms of ratio by weight, is selected usually from the range of 0.05-100, and preferably 0.10-50.

Given as organic aluminum compounds are compounds represented by the formula,

$AlR^2_mX^2_{3-m}$

wherein $R^2$ is an alkyl group having 1-10 carbon atoms, a cycloalkyl group, or an aryl group, m is an integer of 1-3, and $X^2$ is a halogen atom, e.g., chlorine or bromine atom. Specific examples of such aluminum compounds which can preferably be used include, trialkyl aluminums, e.g., trimethyl aluminum, triethyl aluminum, triisopropyl aluminum, triisobutyl aluminum, trioctyl aluminum; dialkyl aluminum monohalides, e.g., diethyl aluminum monochloride, diisopropyl aluminum monochloride, diisobutyl aluminum monochloride, dioctyl aluminum monochloride; alkyl aluminum sesquihalides, e.g., ethyl aluminum sesquichloride; and the like. Either one kind of these aluminum compounds may be singly used or two or more may used in combination. The alkoxy group-containing compounds (C) used for the catalyst system of the present invention are compounds represented by the following formula,

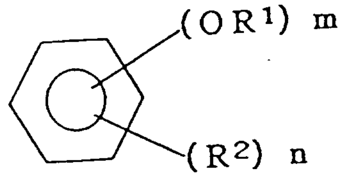

wherein $R^1$ is an alkyl group having 1-20 carbon atoms, $R^2$ is a hydrocarbon group having 1-10 carbon atoms, hydroxy group, or nitro group, m is an integer of 1-6, and n is an integer of 1 to (6-m).

Specific examples include monoalkoxy compounds, such as m-methoxytoluene, o-methoxyphenol, m-methoxyphenol, 2-methoxy-4-methylphenol, vinylanisole, p-(1-propenyl)anisole, p-allylanisole, 1,3-bis(p-methoxyphenyl)-1-pentene, 5-allyl-2-methoxyphenol, 4-allyl-2-methoxyphenol, 4-hydroxy-3-methoxybenzyl alcohol, methoxybenzyl alcohol, nitroanisole, nitrophenethole, and the like; dialkoxy compounds, such as o-dimethoxybenzene, m-dimethoxybenzene, p-dimethoxybenzene, 3,4-dimethoxytoluene, 2,6-dimethoxyphenol, 1-allyl-3,4-dimethoxybenzene, and the like; and trialkoxy compounds, such as 1,3,5-trimethoxybenzene, 5-allyl-1,2,3-trimethoxybenzene, 5-allyl-1,2,4-trimethoxybenzene, 1,2,3-trimethoxy-5-(1-propenyl)-benzene, 1,2,4-trimethoxy-5-(1-propenyl)benzene, 1,2,3-trimethoxybenzene, 1,2,4-trimethoxybenzene, and the like. Of the above compounds, dialkoxy and trialkoxy compounds are preferred. Either one kind of these alkoxy group-containing compounds may be used or two or more of them may used in combination.

In the preparation according to the process of the present invention, electron donating compound (D) can be used together as required.

As an electron donating compound (D) used in the catalyst system of the present invention, a compound containing oxygen, nitrogen, phosphorous, sulfur, silicon, or the like, and basically having a capability of promoting regularity in the propylene polymerization can be considered.

The same electron donating compounds (c) as used for the preparation of said solid catalyst component (A) can be used as the electron donating compounds (D). Among the above compounds, especially preferred are organic silicon compounds, esters, ethers, ketones, and acid anhydrides. In particular, organic silicon compounds such as diphenyldimethoxysilane, phenyltriethoxysilane, and the like, diesters of aromatic dicarboxylic acid such as di-n-butyl phthalate, di-i-butyl phthalate, and the like, $C_{1-4}$ alkyl esters of aromatic monocarboxylic acid such as benzoic acid, p-methoxybenzoic acid, p-ethoxybenzoic acid, toluic acid, and the like, are preferred. Diesters of aromatic dicarboxylic acid are especially preferable due to their capability of promoting the catalytic activity and its continued effect.

The electron donating compounds (D) may be either the same electron donating compounds (c) used for the preparation of said solid catalyst component (A) or may be different from them. As to the amount of each component to be used for the catalyst system of the present invention, the solid catalyst component (A) or the solid component (E) is used usually in an amount of 0.0005-1 mole, as titanium atom, for 1 litter of the reactive components. The organic aluminum compound (B) is used usually in an amount such that the atomic ratio of aluminum and titanium be 1-3,000, and preferably 40-800. If the amount is outside the defined range, the catalyst activity may be insufficient. The alkoxy group-containing aromatic compound (C) is used in an amount such that the molar ratio of this compound to the titanium atom contained in the solid catalyst component (A) or the solid component (E) falls within the range usually of 0.01-500, and preferably 1-300. If the amount is less than 0.01, properties of the produced polymer may be lowered; if it exceeds 500, the catalyst activity tends to be lowered. The electron donating compound (D) is used in an amount such that its molar ratio to said alkoxy group-containing aromatic compound (C) [(C)/(D)] falls within the range usually of 0.01-100, and preferably 0.2-100. Next, the process for the manufacture of olefin polymers of the present invention by using the above-mentioned catalyst system is illustrated.

In the present invention, at least one kind of $\alpha$-olefin is polymerized in the presence of the above-mentioned catalyst system to produce an $\alpha$-olefin homopolymer (e.g., propylene homopolymer or the like) or an $\alpha$-olefin copolymer (e.g., propylene-$\alpha$-olefin random copolymer, ethylene-propylene block copolymer, or the like). As $\alpha$-olefins used in the present invention as the raw material, those containing 2-30 carbon atoms are preferable. Given as examples of such $\alpha$-olefins are ethylene, propylene, butene-1, pentene-1, 4-methylpentene-1, hexene-1, heptene-1, octene-1, nonene-1, decene-1, and the like. These may be used either singly or two or more of them may be used in combination.

As a polymerization method, a non-solvent polymerization method, such as gas phase polymerization, bulk polymerization, or the like, is used, with the gas phase polymerization being preferable.

Here, the gas phase polymerization includes the case where the polymerization is carried out in one step (the gas phase one-step polymerization method) and the gas phase multi-stage polymerization method. The gas phase one-step polymerization method is used for the manufacture of $\alpha$-olefin homopolymers (e.g., propylene homopolymer or the like) or propylene-$\alpha$-olefin random copolymers. The gas phase multi-stage polymerization method is used for the manufacture of ethylene-propylene block copolymers, ethylene-propylene-polyene ternary block copolymers, and the like.

Reaction conditions for the gas phase one-step polymerization are appropriately selected, as to the pressure, from the range usually of 5-100 $kg/cm^2$ (preferably 10-50 $kg/cm^2$), and as to the temperature, from the range usually of 40-90 °C (preferably 60-75 °C). Molecular weight control of the polymers can be effected by known methods, for example, by adjusting the hydrogen concentration in the reaction vessel.

The polymerization reaction time is dependent on the types of raw material olefins and the reaction temperature, and thus cannot be indiscriminately determined, although a reaction time of about 5 minutes to 10 hours is sufficient.

In the case where the polymerization is carried out by the gas phase one-step polymerization, propylene is given as a particularly preferable raw material α-olefin if it is polymerized alone; and for copolymerization, propylene and α-olefins with 4-30 carbon atoms are given as preferable raw materials. For such copolymerization, the molar ratio of α-olefin to propylene is preferably in the range of 0.2-20.

In the case where the polymerization is carried out by the gas phase multi-stage polymerization method, the first polymerization (the first stage polymerization) is preferably homopolymerization of α-olefin or copolymerization of propylene and an α-olefin with 4-30 carbon atoms. Molecular weight control of the polymers can be effected by known methods (e.g. by adjusting the hydrogen concentration). The polymerization temperature is usually in the range of 40-90 °C (preferably 60-75 °C), the polymerization pressure is 5-100 $kg/cm^2$ (preferably 10-50 $kg/cm^2$), and the polymerization time is from 5 minutes to 10 hours.

Polymerizations from the second stage through the final stage (n stage polymerization) are ethylene-propylene copolymerization or ethylene-propylene-polyene copolymerization.

Here, nonconjugated polyenes are preferable as polyenes. Examples which can be given include dicyclopentadiene, tricyclopentadiene, 5-methyl-2,5-norbornadiene, 5-methylene-2-norbornene, 5-ethylidene-2-norbornene, 5-isopropylidene-2-norbornene, 5-isopropenyl-2-norbornene, 5-(1-butenine)-2-norbornene, cyclooctadiene, vinylcyclohexene, 1,5,9-cyclododecatriene, 6-methyl-4,7,8,9-tetrahydroindene, 2,2'-dicyclopentenyl, trans-1,2-divinylcyclobutane, 1,4-hexadiene, 4-methyl-1,4-hexadiene, 1,6-octadiene, 1,7-octadiene, 1,8-nonadiene, 1,9-decadiene, 3,6-dimethyl-1,7-octadiene, 4,5-dimethyl-1,7-octadiene, 1,4,7-octatriene, 5-methyl-1, 8-nonadiene, norbornadiene, vinylnorbornene, and the like. Among these nonconjugated polyenes especially preferred are dicyclopentadiene, 5-ethylidene-2-norbornene, 1,7-octadiene, and the like.

Molecular weight control in each of the polymerization steps can be effected by known methods (e.g. by adjusting the hydrogen concentration). In the case of ethylene-propylene copolymer, control of the ethylene unit content can be achieved by adjusting the feed gas composition. Also, in the case of ethylene-propylene-polyene copolymer, the control of the polyene unit content can be made by adjusting the feed amount of the polyene compounds. The polymerization temperature is 20-90 °C (preferably 40-50 °C), the polymerization pressure is 5-70 $kg/cm^2$ (preferably 10-40 $kg/cm^2$), and the polymerization time is from 5 minutes to 10 hours.

Ethylene-propylene block copolymers, ethylene-propylene-polyene ternary block copolymers, and the like can be manufactured by the above-mentioned gas phase multi-stage polymerization method.

In the above polymerization, each of the components constituting the catalyst system, i.e., components (A)-(D), is mixed at a specified ratio and contacted each other, following which olefin is introduced to commence the polymerization. Alternatively, the mixture may be aged for about 0.2-3 hours after the contact before the olefin is introduced. In addition, the catalyst components may be supplied by being suspended in an inert solvent, olefin, or the like.

In the present invention, the treatment after the polymerization can be performed according to conventional methods. That is, in the case of the gas phase polymerization, a nitrogen gas stream or the like may be passed through polymer powder taken out of the polymerization vessel after the polymerization in order to remove olefins and the like therefrom. If desired, the polymer may be pelletized by an extruder. In this instance, a small amount of water, alcohol, or the like may be added in order to completely inactivate the catalyst. In the case of bulk polymerization, the polymer can be made into pellet after completely removing monomers contained therein when it is taken out from the polymerization vessel after the polymerization.

According the present invention a process for the manufacture of olefin polymers, which exhibits a pulling strength sufficient for practical uses even before vulcanization, possesses sufficient flexibility, low temperature characteristics, and minimal surface adhesiveness, requires only a low production cost, and has an excellent powder flowability, can be provided.

**Brief Description of the Drawings**

Figure 1 is a flow chart showing the process of the present invention.

Figure 2 is a diagram showing a powder flowability test machine.

## Best Mode for Conducting the Invention

The present invention is hereinafter described in detail by way of examples and comparative examples, which shall not be limitative of the present invention.

The following reagents were used in the following examples and comparative examples.

| | |
|---|---|
| Metallic magnesium: | granule (average particle size: 350 μm) |
| Ethanol: | A product of Wako Pure Chemicals Co., Ltd., Special grade reagent |
| Iodine: | A product of Wako Pure Chemicals Co., Ltd., Special grade reagent |
| Magnesium chloride: | A product of Wako Pure Chemicals Co., Ltd., special grade reagent |

Example 1

(1) Preparation of solid catalyst component (A)

A reaction vessel (internal volume: about 6 l) made of glass equipped with a stirrer was sufficiently replaced with nitrogen gas. To the vessel were charged about 2,430 g of ethanol, 16 g of iodine, and 160 g of metallic magnesium, and the mixture was reacted with heating under refluxing conditions while stirring until hydrogen gas generation from the system terminated, thus obtaining a solid reaction product. The reaction liquid containing this solid reaction product was dried under reduced pressure to obtain solid catalyst component (a).

To a three-necked flask (internal volume: about 500 ml) made of glass and sufficiently replaced with nitrogen gas were charged 16 g of said solid catalyst component (a) (without being pulverized), 80 ml of purified heptane, 2.4 ml of silicon tetrachloride, and 2.3 ml of diethyl phthalate. 77 ml of titanium tetrachloride was charged to the flask while maintaining the internal temperature at 90 ° C and stirring the mixture, following which the mixture was reacted for 2 hours at 110 ° C. The solid component was separated and washed with purified heptane at 80 ° C. 122 ml of titanium tetrachloride was further added, followed by the reaction for 2 hours at 110 ° C. The solid material was thoroughly washed with purified heptane to obtain solid catalyst component (A).

(2) Gas phase one-step reaction

To a 5 l pressure-resistant stainless autoclave was charged 20 ml of a heptane solution containing 3 mmol of $AlEt_3$, 0.15 mmol of 1-allyl-3,4-dimethoxybenzene (ADMB), 0.23 mmol of diphenyldimethoxysilane (DPDMS), and 100 mg (0.06 mmol as titanium atom) of said solid catalyst component (A) prepared in (1) above. The reaction system was degassed for 5 minutes, followed by a gas phase reaction at 70 ° C for 1.7 hours while supplying propylene gas until the total pressure reached 29 $Kg/cm^2$.

Examples 2-3

The reactions were carried out in the same manner as in Example 1, except that the amounts of diphenyldimethoxysilane (DPDMS), which is the component (D), were changed as shown in Table 1.

Example 4

The reaction was carried out in the same manner as in Example 1, except that triethyl aluminum (TEA), which is the component (B), was replaced by triisobutyl aluminum (TiBA).

Example 5

The reaction was carried out in the same manner as in Example 4, except that hydrogen in the amount shown in Table 1 was added during the polymerization.

Examples 6-7

The reactions were carried out in the same manner as in Example 1, except that hydrogen in the amounts shown in Table 1 were added during the polymerization.

Example 8

(1) Preparation of solid catalyst component (A)

Solid catalyst component (A) was obtained in the same manner as in Example 1 (1).

(2) Preparation of solid component (E)

To a three-necked pressure-resistant flask with an internal volume of about 2.5 l made of glass and sufficiently replaced with nitrogen gas were charged 1.7 l of purified heptane, 0.07 mol of $AlEt_3$, 0.05 mmol of diphenyldimethoxysilane (DPDMS), and 120 g of said solid catalyst component (A) prepared in (1) above. The reaction system was maintained at 30°C and propylene was continuously supplied while maintaining the pressure at 0.5 Kg/cm$^2$. The reaction was continued for 1 hour and the product was washed 5 times with 1 l of purified heptane to obtain solid component (E).

(3) Gas phase one-step reaction

A gas phase reaction was carried out in the same manner as in Example 1 (1) by using the solid component (E).

Comparative Example 1

(1) Preparation of solid catalyst component (X)

To a three-necked pressure-resistant flask with an internal volume of 0.5 l made of glass and sufficiently replaced with nitrogen gas were charged 20 ml of purified heptane, 4 g of $Mg(OEt)_2$, 1.2 g of di-n-butyl phthalate. While maintaining the system at 90°C, 4 ml of $TiCl_4$ was added dropwise with stirring, following which 111 ml of $TiCl_4$ was additionally charged and the temperature of the system was raised to 110°C. After the reaction for 2 hours at 110°C, the resulting product was washed with purified heptane at 80°C. 115 ml of $TiCl_4$ was added to the solid portion thus obtained, followed by a further reaction for 2 hours at 110°C. After the reaction, the product was washed several times with 100 ml of purified heptane to obtain solid catalyst component (X).

(2) Preparation of solid catalyst component (Y)

To a three-necked pressure-resistant flask with an internal volume of 2.5 l made of glass and sufficiently replaced with nitrogen gas were charged 1.7 l of purified heptane, 0.07 mol of $AlEt_3$, 0.05 mmol of diphenyldimethoxysilane (DPDMS), and 120 g of said solid catalyst component (X) prepared in (1) above. The reaction system was maintained at 30°C and propylene was continuously supplied with stirring and while maintaining the internal pressure at 0.5 Kg/cm$^2$. The reaction was continued for 1 hour and the product was washed 5 times with 1 l of purified heptane to obtain solid component (Y).

(3) Gas phase one-step reaction

To a 5 l pressure-resistant stainless autoclave containing 20 g of polypropylene powder was charged 20 ml of a heptane solution containing 3 mmol of $AlEt_3$, 0.15 mmol of 1-allyl-3,4-dimethoxybenzene (ADMB), 0.23 mmol of diphenyldimethoxysilane (DPDMS), and 100 mg (0.06 mmol as titanium atom) of said solid component (Y) prepared in (2) above. The reaction system was degassed for 5 minutes, followed by a gas phase reaction at 70°C for 1.7 hours while supplying propylene gas until the total pressure reached 29 Kg/cm$^2$.

Comparative Examples 2-3

The reactions were carried out in the same manner as in Comparative Example 1, except that the amounts of diphenyldimethoxysilane (DPDMS), which is the component (D), were changed as shown in Table 1.

Comparative Examples 4-5

The reactions were carried out in the same manner as in Comparative Example 1, except that hydrogen in the amount shown in Table 1 was added during the polymerization.

Catalyst compositions, polymerization conditions, the results of polymerization in the above Examples and Comparative Examples are shown in Table 1.

Powder flowability was measured according to the following procedure 1-3 by using the powder flowability test machine made of SUS shown in Figure 2.

1. The powder flowability test machine was horizontally fixed. A powder sample (at room temperature) to be measured was filled in the test machine so as not to provide vibration.
2. When the powder was filled up by using a leveling rod, the bottom gate was opened to measure the time (T) required for all amount of the powder to be discharged from the powder flowability test machine.
3. The discharged powder was accurately weighed (weight: W) to determine the powder flowability (F) by the following equation.

$$\text{Powder Flowability (F)} = \frac{\text{Powder Weight (W)}}{\text{Time (T)}} \quad \text{(g/sec)}$$

In addition, melt index (MI), the amount and intrinsic viscosity [$\eta$] of the HSP portion were measured according to the following methods.

MI: JIS-K7210 were followed, using measurement conditions of a test temperature of 230 °C and a test load of 2.16 Kgf.

HSP portion: The amount soluble in boiling heptane.

Intrinsic viscosity [$\eta$] of the HSP portion: measured in decaline at 135 °C.

**Industrial Applicability**

The vulcanized rubber-like olefin polymer manufactured as illustrated above can be suitably used as automobile parts, industrial machine parts, electronic or electric parts, building materials, and the like.

[Table 1]

| | Catalyst Composition | | | | | | Polymerization Conditions | | Results of Polymerization | | | |
|---|---|---|---|---|---|---|---|---|---|---|---|---|
| | Alkyl Aluminum | | Alkoxy-containing compound | | Electron donating compound | | Temperature | Amount of Hydrogen | MI | HSP Portion | | Powder Flowability |
| | Kind | Amount(mmol) | Kind | Amount(mmol) | Kind | Amount(mmol) | (°C) | $(kg/cm^2)$ | (g/10 min) | Ratio (wt%) | [η] (dl/g) | (g/sac) |
| Example 1 | TEA | 3.0 | ADMB | 0.15 | DPDMS | 0.23 | 70 | - | 0.25 | 39.1 | 1.95 | 10.2 |
| Example 2 | TEA | 3.0 | ADMB | 0.15 | DPDMS | 0.12 | 70 | - | 0.36 | 47.3 | 2.16 | 7.5 |
| Example 3 | TEA | 3.0 | ADMB | 0.15 | DPDMS | 0.30 | 70 | - | 0.20 | 35.1 | 1.95 | 12.1 |
| Example 4 | TEA | 3.0 | ADMB | 0.15 | DPDMS | 0.23 | 70 | - | 0.11 | 37.8 | 2.58 | 12.5 |
| Example 5 | TiBA | 3.0 | ADMB | 0.15 | DPDMS | 0.23 | 70 | 0.2 | 0.50 | 39.9 | 2.15 | 9.0 |
| Example 6 | TEA | 3.0 | ADMB | 0.15 | DPDMS | 0.23 | 70 | 0.2 | 0.61 | 43.3 | 2.02 | 7.2 |
| Example 7 | TEA | 3.0 | ADMB | 0.15 | DPDMS | 0.23 | 70 | 0.4 | 1.10 | 40.1 | 1.81 | 6.5 |
| Example 8 | TEA | 3.0 | ADMB | 0.15 | DPDMS | 0.23 | 70 | - | 0.27 | 37.9 | 2.01 | 14.2 |
| Comparative Example 1 | TEA | 3.0 | ADMB | 0.15 | DPDMS | 0.23 | 70 | - | 0.07 | 35.1 | 1.95 | 7.0 |
| Comparative Example 2 | TEA | 3.0 | ADMB | 0.15 | DPDMS | 0.12 | 70 | - | 0.07 | 39.1 | 1.95 | 5.0 |
| Comparative Example 3 | TEA | 3.0 | ADMB | 0.15 | DPDMS | 0.30 | 70 | - | 0.07 | 25.0 | 1.77 | 8.1 |
| Comparative Example 4 | TEA | 3.0 | ADMB | 0.15 | DPDMS | 0.23 | 70 | 0.2 | 0.61 | 38.7 | 1.90 | 5.1 |
| Comparative Example 5 | TEA | 3.0 | ADMB | 0.15 | DPDMS | 0.23 | 70 | 0.4 | 1.10 | 40.4 | 1.81 | 3.9 |

## Claims

1. A process for manufacturing an olefin polymer by a solvent-free polymerization method characterized by using a catalyst system comprising,

   (A) a solid catalyst component obtained by the reaction, either in the presence or absence of an electron donating compound, of (a) a solid product obtained by reacting metallic magnesium, an alcohol, and a halogen atom in an amount of 0.0001 gram-atom or greater for 1 gram-atom of said

metallic magnesium or a halogen-containing compound, which contains a halogen atom in an amount of 0.0001 gram-atom or greater for 1 gram-atom of said metallic magnesium, and (b) a halogenated titanium compound;
(B) an organic aluminum compound;
(C) an alkoxy group-containing aromatic compound represented by the following formula;

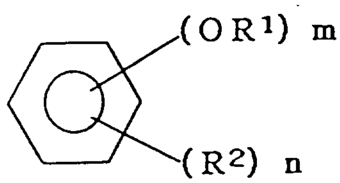

wherein $R^1$ is an alkyl group having 1-20 carbon atoms, $R^2$ is a hydrocarbon group having 1-10 carbon atoms, a hydroxy group, or a nitro group, m is an integer of 1-6, and n is 0 or an integer 1 to (6-m); and
(D) an electron donating compound.

**2.** A process for manufacturing an olefin polymer by a solvent-free polymerization method characterized by using a catalyst system comprising,
(E) a solid component composed by said solid catalyst component (A) defined in Claim 1 and a crystalline polyolefin;
(B) an organic aluminum compound;
(C) an alkoxy group-containing aromatic compound defined in Claim 1; and
(D) an electron donating compound.

FIGURE 1

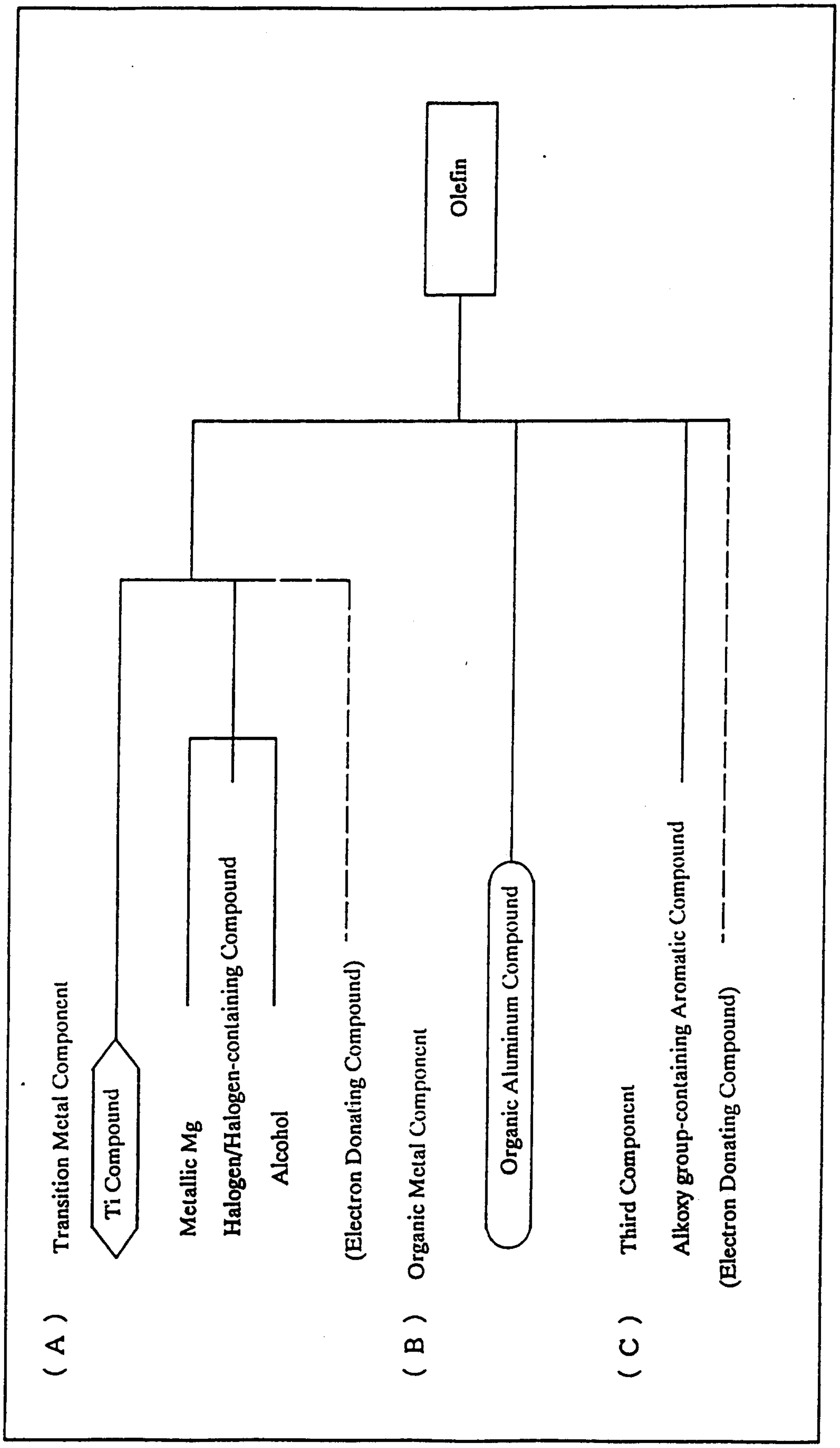
Olefin
( A ) Transition Metal Component
Ti Compound
Metallic Mg
Halogen/Halogen-containing Compound
Alcohol
(Electron Donating Compound)
( B ) Organic Metal Component
Organic Aluminum Compound
( C ) Third Component
Alkoxy group-containing Aromatic Compound
(Electron Donating Compound)

FIGURE 2

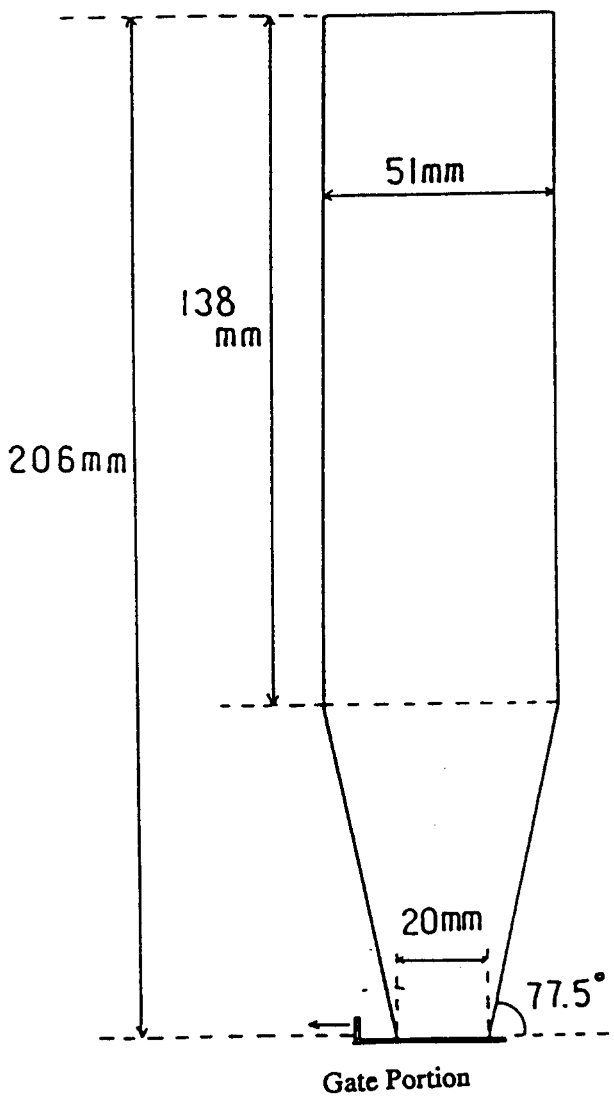

# INTERNATIONAL SEARCH REPORT

International Application No PCT/JP92/00805

**I. CLASSIFICATION OF SUBJECT MATTER** (if several classification symbols apply, indicate all) [6]

According to International Patent Classification (IPC) or to both National Classification and IPC

Int. $Cl^5$ C08F10/00, 4/654

**II. FIELDS SEARCHED**

Minimum Documentation Searched [7]

| Classification System | Classification Symbols |
|---|---|
| IPC | C08F10/00-10/14, 110/00-110/14, 210/00-210/18, 4/64-4/685 |

Documentation Searched other than Minimum Documentation to the Extent that such Documents are Included in the Fields Searched [8]

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| Y | JP, A, 3-74341 (Korcort Engineering K.K.), March 28, 1991 (28. 03. 91), Claim (Family: none) | 1-2 |
| Y | JP, A, 63-54404 (Shell Oil Co.), March 8, 1988 (08. 03. 88), Claim & FI, A, 872711 & NO, A, 872539 & US, A, 4710482 & EP, A, 250244 & AU, A, 7422087 & CN, A, 87104645 | 1-2 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| September 14, 1992 (14. 09. 92) | October 13, 1992 (13. 10. 92) |
| International Searching Authority | Signature of Authorized Officer |
| Japanese Patent Office | |